# EUROPEAN PATENT APPLICATION

(11) **EP 2 492 021 A1**
(43) Date of publication of application: **29.08.2012**
(21) Application number: 12156703.6
(22) Date of filing: 23.02.2012
(51) Int. Cl.: B05B 15/04, F16B 37/06, F16B 37/14, F16B 13/14, C25D 7/04, C25D 13/14

(54) **Fastener for use in electrodeposition and method**

(30) Priority: 28.02.2011 GB 201103353
(71) Applicant: Nissan Motor Manufacturing (UK) Ltd., Cranfield Bedfordshire MK43 0DB (GB)
(72) Inventor: Withington, Neill, Cranfield, Bedfordshire MK430DB (GB); Truter, Werner, Cranfield, Bedfordshire MK430DB (GB)

(57) **Abstract**

In the field of automotive construction, a weld nut 10 is adapted for electrodeposition in that the fastener has an internal cavity 16 with a substantially airtight sealed top end 12 provided by a friction fitted or friction welded sealing cap 22 and an open bottom end 14, wherein in use the positive pressure 26 of trapped air 24 in the internal cavity defined by the sealed top end 12 and an open bottom end 14 prevents entry of electrodeposition fluid 18 into the internal cavity 16 of the fastener.

## Description

### Field of the Invention

The present invention relates to fasteners adapted for electrodeposition, in particular weld nuts for use in the field of automotive construction. The invention also relates to a method of electrodepositing a coating on weld nuts, and on sub-assemblies with weld nuts attached to them.

### Background of the Invention

The automotive industry uses a variety of methods to fix vehicle parts or accessories to vehicle bodies or sub-assemblies. One known method of fixing such parts is by means of a bolt fitted to a weld nut. Weld nuts are special types of nuts adapted to be welded to other objects.

It is also known to apply coatings to such weld nuts, either independently or after attachment to a vehicle assembly or sub-assembly. Such coatings may include paint or other coatings, for example anti-rust coatings. Typically such coatings are applied by electrodeposition, including electrophoretic deposition and electroplating techniques. Electrodeposition involves submerging a part in a coating bath and applying a current through the bath so that the coating in the bath is deposited on the part. After deposition is completed, the nut or assembly/sub-assembly is rinsed and cleaned.

Electrophoretic deposition and electroplating have the advantage that as the workpiece has one electric polarity and the paint or plating solution has an opposite polarity, the paint or plating solution is electrically attracted to every surface of the workpiece. This total coverage advantageously resists corrosion but can have drawbacks in inhibiting assembly when the paint or electroplating material builds up on assembly features so that they are no longer the size or shape to permit easy and accurate assembly.

For example, one problem is that the electrodeposition coating can get into the internal cavity of the weld nut. This can cause fouling of the weld nut internal thread. The fouled internal thread makes it difficult to screw a bolt into the internal thread. This causes assembly problems, resulting in delays in the assembly process and other knock-on effects on the rest of the production line. Another problem is that the fouling causes high torque concerns when fitting parts to the weld nut that can lead to component failures.

Cleaning the weld nut to remove fouling can be awkward and time consuming, consuming valuable manpower and manufacturing resources.

In order to avoid such problems, it is known to apply a fluorocarbon coating to the threads so that paint or other electrodeposition coatings will not adhere to the internal cavity. However, this additional masking stage adds complexity and cost to the manufacturing procedure. Furthermore, if the fluorocarbon coating is imperfect then the internal screw thread may still be fouled with contaminant from the electrodeposition process and cause problems.

An alternative solution is to completely plug the weld nut cavity with a polymeric plug, as seen in US5356255 and US2004/0056039. However, this may not provide a watertight seal against the electrodeposition fluid and fouling may still result. Additionally, this approach still requires an additional step and manpower to remove the plug.

### Summary of the Invention

In one aspect of the invention there is provided a fastener adapted for electrodeposition in which the fastener has an internal cavity with a substantially airtight sealed top end and an open bottom end wherein in use the pressure of trapped air in the internal cavity defined by the sealed top end and an open bottom end prevents entry of electrodeposition fluid into the internal cavity of the fastener.

This advantageously prevents fouling of the internal cavity with electrodeposition fluid. By providing a barrier of air the electrodeposition fluid cannot get into the fastener cavity and foul, for example, the internal cavity thread. Although electrodeposition has a "suction effect" where opposite charging pulls paint into cavities, this effect does not have enough pressure to squash the trapped air, so that a masking effect still remains to protect the internal cavity of the fastener from fouling. Advantageously, the described approach also works if a weld nut is submerged in an electrodeposition tank at an angle to its vertical axis, providing that the trapped air masks the desired portion of the internal cavity.

This approach has the added advantage of being simple to effect, requiring only the top end of the fastener to be sealed, and does not need to be removed after electrodeposition is completed. Cost savings can be made because no additional manpower is needed to clean the weld nuts or remove any masking material in the weld nuts. Also, there are fewer high torque concerns, reducing assembly times.

Electrodeposition here includes but is not limited to electrophoretic deposition (EPD), electro-coating, e-coating, cathodic electrodeposition, and electrophoretic coating, electrophoretic painting, and electro-plating.

Preferably, the top end is sealed by a cap that is friction fitted or friction welded into the top end of the internal cavity of the fastener.

The top end may be sealed by a bolt that fits into the top end of the internal cavity of the fastener.

The top end may be sealed by a rubber or plastic plug that fits into the top end of the internal cavity of the fastener.

Preferably, the fastener is a weld nut, and the weld nut internal cavity may be threaded or partially threaded.

The fastener may be permanently attached to a sub-assembly. The sub-assembly may be part of a vehicle.

In another aspect of the invention, there is provided a method of coating a fastener that has an internal cavity, comprising the steps of sealing one end of the internal cavity to form an substantially airtight seal wherein in use the pressure of trapped air in the internal cavity defined by the airtight sealed top end and an open bottom end prevents entry of electrodeposition fluid into the internal cavity of the fastener; and submerging the fastener in a fluid; and wherein the sealed end is kept substantially uppermost in the fluid so that the internal pressure of the cavity prevents entry of the fluid into the internal cavity of the fastener. The fastener may be a weld nut, and may be permanently attached to a sub-assembly, such as a part of a vehicle.

### Brief Description of the Drawings

The present invention will now be described, by way of example only, with reference to the accompanying drawings, in which:
Figure 1 shows a cross-sectional view across a longitudinal axis of a prior art weld nut;
Figure 2 shows electrodeposition of a weld nut in accordance with an embodiment of the invention;
Figure 3 shows electrodeposition of a weld nut in accordance with an embodiment of the invention where the weld nut is submerged at an angle;
Figure 4 shows a cross-sectional view across a longitudinal axis of a weld nut in accordance with another embodiment of the invention;
Figure 5 shows a cross-sectional view across a longitudinal axis of a weld nut in accordance with another embodiment of the invention; and
Figure 6 shows a cross-sectional view across a longitudinal axis of a weld nut in accordance with another embodiment of the invention.

In the drawings, like parts are denoted by like reference numerals.

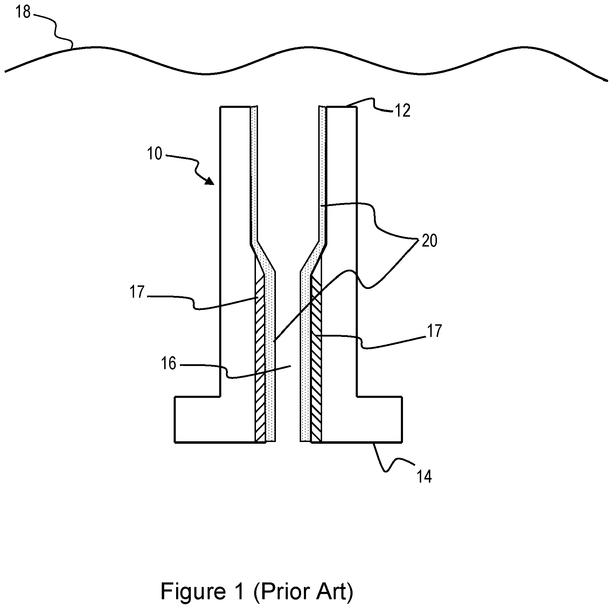

Figure 1 shows a cross-sectional view across a longitudinal axis of a prior art weld nut 10 with top end 12 and bottom end 14. The weld nut has axial cavity 16. Cavity 16 is shown here provided with an internally threaded portion 17. In the example shown, the weld nut 10 has been submerged in a bath of electrodeposition fluid 18 in order to be coated with for example, paint during a manufacturing process. Because the cavity 16 is exposed during the electrodeposition process, there is an unwanted coating in the cavity resulting in the build up of fouling 20. The fouling 20 can cause serious problems when later fitting parts to the weld nut 10, and so the weld nut needs to be cleaned, adding time and manpower to the manufacturing process.

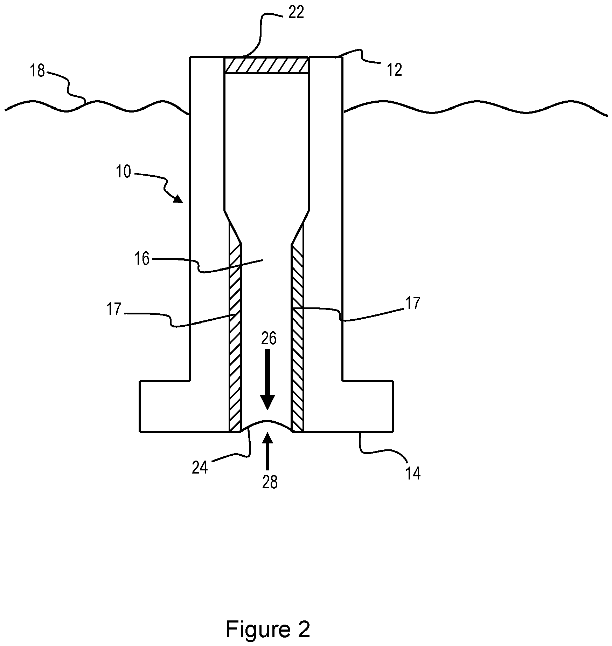

Figure 2 shows a cross-sectional view across a longitudinal axis of a weld nut adapted for use in electrodeposition. There is shown a weld nut 10 with top end 12 and bottom end 14. The weld nut has cavity 16 with thread 17. The weld nut 10 has been submerged in a bath of electrodeposition fluid 18 in order to be coated with for example, paint. There is provided a sealing cap 22 that is friction fitted or friction welded into the top of the weld nut to provide a substantially airtight seal.

The seal provided by the sealing cap needs to be airtight for the duration of the electrodeposition process and for the typical pressures experienced during submersion in an electrodeposition bath.

The seal created by the sealing cap 22 creates an air bubble 24 in the cavity 16 where the positive internal air pressure 26 inside the cavity is balanced against the external pressure 28 of the electrodeposition fluid 18, preventing the electrodeposition fluid 18 from entering the cavity 16. The cavity 16 is thus masked against fouling by the electrodeposition fluid 18. Typically the cavity 16 of the weld nut 10 will be threaded, either partially or completely, to allow the fitting of screws, bolts or other parts to the nuts. The internal cavity can have a parallel, tapered, flared or complex profile, depending on requirements.

The weld nut is shown being coated individually for clarity. In operation, the weld nut may be already fixed to another object, such as a vehicle sub-assembly for a vehicle.

The sealing cap 22 in this example is fitted to the top end 12 of the weld nut 10 by friction welding, or potentially by friction fitting. In this process, the cap can be pushed in using a press, creating an interference fit.

The process of electrodeposition is well known and includes but is not limited to such processes as electrophoretic deposition (EPD), electro-coating, e-coating, cathodic electrodeposition, and electrophoretic coating, electrophoretic painting, and electro-plating. Typically electrophoretic deposition (EPD) is used to coat parts with paint primer or paint. Anti-rust coatings can be used, for example applying a zinc coating by electro-plating.

The type of fastener shown is a weld nut and can be for example a round base nut, slab base nut, tab base nut, hex nut, square nut, retainer weld nut, or tube end nut. The type of nut used will depend on the placement of the nut and its intended purpose but the principle of using an air bubble to mask important internal portions of the internal cavity of a weld nut remains the same.

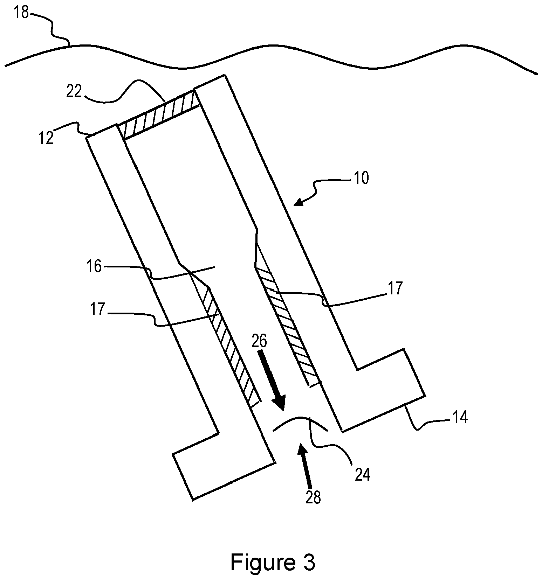

Figure 3 shows electrodeposition of a weld nut in accordance with an embodiment of the invention where the weld nut is submerged at an angle. The weld nut 10 need only be lowered into an electrodeposition bath 18 vertically enough to provide an air bubble 24 to mask the key areas of the internal cavity to be protected against fouling such as, for example, any threaded portion 17. Although typically the weld nut is fully submerged in the electrodeposition bath, the weld nut need not be fully submerged in the electrodeposition bath for the masking air bubble to be effective. In the example shown, only a small portion of the internal cavity is threaded. In this example, even though a greater amount of electrodeposition liquid may enter the internal cavity due to the angle of the weld nut, the air bubble 24 present an adequate barrier to mask against fouling of the desired portions of the internal cavity, as before.

It is possible to use alternative methods to seal the top end 12 of the weld nut 10.

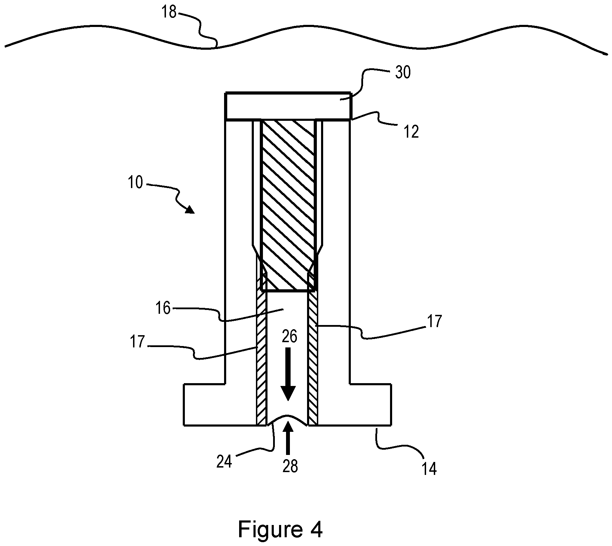

Figure 4 shows a cross-sectional view across a longitudinal axis of a weld nut where the sealing cap is provided by a screw 30. The screw can be screwed into the weld nut 10 as shown, or it can be welded on to the top end 12 of the nut.

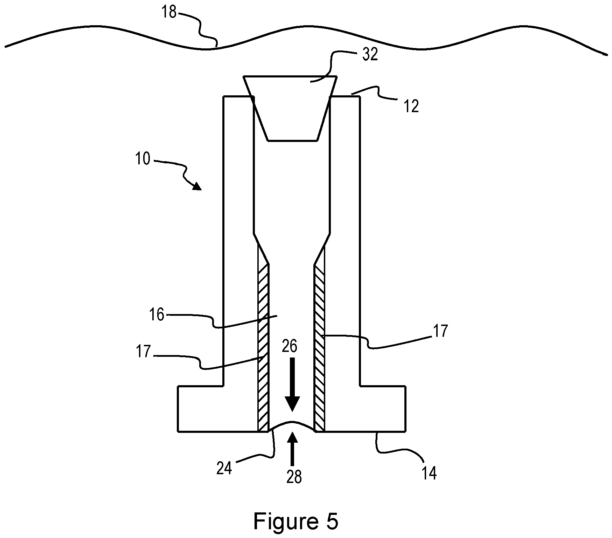

Figure 5 shows a cross-sectional view across a longitudinal axis of a weld nut where the sealing cap is provided by a push-fit plug 32 made from a suitable material, for example, rubber or plastic.

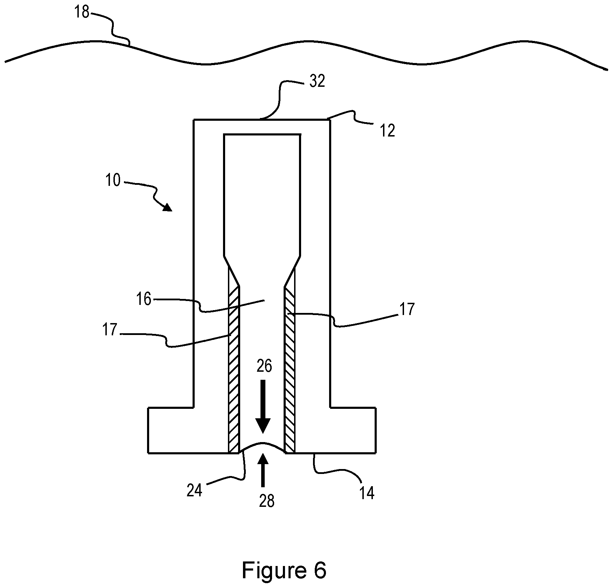

Figure 6 shows a cross-sectional view across a longitudinal axis of a weld nut where the sealing cap is provided by an integrally formed closed end 34 of the weld nut 10. In this example, the top end 12 of the weld nut 10 is not machined open, as typically is the case with weld nuts, but has been left closed during the machining process to produce a weld nut with a closed top end.

Various modifications will be apparent to those skilled in the art. For example, instead of electrodeposition coating, an oil coating can be used. The masking effect in the cavity can be provided by another gas apart from air. While the invention has been described with respect to a limited number of embodiments, those skilled in the art will appreciate that other embodiments can be devised which do not depart from the scope of the invention as disclosed herein.

## Claims

1. A fastener adapted for electrodeposition in which the fastener has an internal cavity with a substantially airtight sealed top end and an open bottom end wherein in use the pressure of trapped air in the internal cavity defined by the sealed top end and the open bottom end prevents entry of coating fluid into the internal cavity of the fastener.

2. A fastener as claimed in claim 1 wherein the top end is sealed by a cap that is friction fitted or welded into the top end of the internal cavity of the fastener.

3. A fastener as claimed in claim 1 wherein the top end is sealed by a bolt that fits into the top end of the internal cavity of the fastener.

4. A fastener as claimed in claim 1 wherein the top end is sealed by a rubber or plastic plug that fits into the top end of the internal cavity of the fastener.

5. A fastener as claimed in claim 1 wherein the seal in the top end is integrally formed in the weld nut during the fastener manufacturing process.

6. A fastener as claimed in any preceding claim wherein the fastener is permanently attached to a sub-assembly.

7. A fastener and sub-assembly as claimed in claim 6 wherein the sub-assembly is part of a vehicle.

8. A fastener as claimed in any preceding claim wherein the coating is an electrodeposition coating.

9. A fastener as claimed in any preceding claim wherein the fastener is a weld nut.

10. A method of coating a fastener that has an internal cavity, comprising the steps of:
• sealing one end of the internal cavity to form a substantially airtight seal wherein in use the pressure of trapped air in the internal screw cavity defined by the airtight sealed top end and an open bottom end prevents entry of coating fluid into the internal cavity of the fastener;
• submerging the fastener in a fluid; and
• wherein the sealed end is kept uppermost in the fluid so that the internal pressure of the cavity prevents entry of the fluid into the internal cavity of the fastener.

11. A method of coating a fastener as claimed in claim 10 wherein the fastener is permanently attached to a sub-assembly.

12. A method of coating a fastener as claimed in claim 11 wherein the sub-assembly is part of a vehicle.

13. A method of coating a fastener as claimed in any of claims 10 to 12 wherein the coating is an electrodeposition coating.

14. A method of coating a fastener as claimed in any of claims 10 to 13 wherein the fastener is a weld nut.

15. A fastener substantially as described herein with reference to Figures 2 to 5.

16. A method of electrodeposition of a fastener substantially as described herein with reference to Figures 2 to 5.
